# FASCICULE DE BREVET EUROPEEN

(11) **EP 3 631 608 B1**
(45) Date de publication et mention de la délivrance du brevet: **20.07.2022**
(21) Numéro de dépôt: 18728832.9
(22) Date de dépôt: 25.05.2018
(51) Int. Cl.: G06F 3/043

(54) **PROCÉDÉ DE COMMANDE D'UN DISPOSITIF NOMADE**
VERFAHREN ZUR STEUERUNG EINER MOBILEN VORRICHTUNG
METHOD FOR CONTROLLING A MOBILE DEVICE

(30) Priorité: 29.05.2017 FR 1754696
(43) Date de publication de la demande: 08.04.2020
(73) Titulaire: Hap2u, 38400 Saint-Martin-d'Hères (FR)
(72) Inventeur: VEZZOLI, Eric, 38000 Grenoble (FR); CHAPPAZ, C drick, 38530 Pontcharra (FR)
(74) Mandataire: Le Goaller, Christophe
(86) Numéro de dépôt international: PCT/EP2018/063819
(87) Numéro de publication internationale: WO 2018/219822

(56) Documents cités:
- EP-A1- 2 544 077
- WO-A1-2014/091089
- US-A1- 2009 243 997
- US-A1- 2010 085 216
- US-A1- 2011 084 940
- US-A1- 2012 191 267
- US-A1- 2013 222 230
- US-A1- 2015 242 036
- US-A1- 2015 331 966

## Description

### DOMAINE TECHNIQUE

L'invention est un procédé de localisation d'un point de l'impact d'un objet, par exemple un doigt ou un stylet, sur un support, sur lequel est disposé un dispositif nomade, par exemple une tablette ou un téléphone portable.

### ART ANTERIEUR

L'essor des écrans tactiles, notamment appliqués à des dispositifs nomades de type tablette ou ordiphone, s'accompagne de nombreux développements. Ces écrans comportent généralement une plaque, formant une interface, transparente et lisse, sur laquelle il est possible de piloter différents paramètres ou applications logicielles par le contact avec un doigt. Ces écrans sont fréquemment couplés à un maillage réalisé selon un matériau conducteur transparent, de façon à détecter la position d'un point de contact sur la plaque par effet capacitif. Le maillage définit généralement une matrice, et la position du point de contact d'un doigt est aisément déterminée par effet capacitif. La connaissance de la position du doigt sur la plaque d'interface permet de générer un signal de commande, destiné à piloter une fonctionnalité du dispositif, ou destiné à un piloter, par liaison sans fil, un récepteur distant, par exemple un haut-parleur ou une télévision.

Récemment, des dispositifs ont été développés, permettant de simuler une sensation de texture lorsqu'un doigt d'un utilisateur est appliqué sur une plaque d'interface. Un tel dispositif est par exemple décrit dans la publication Biet M.,"Squeeze film effect for the design of an ultrasonic tactile plate", IEEE Transactions on Ultrasonic, Ferroelectrics and Frequency Control, IEEE, 2007, 54 (12), pp.2678 - 2688, désignée par la suite Biet 2007, ou encore dans la demande de brevet EP1956466. Dans ces documents, on décrit une interface tactile comportant une plaque d'interface lisse, destinée à être touchée par un doigt. Cette plaque est mise en vibration par plusieurs transducteurs piézoélectriques, disposés au contact de la plaque, en dessous de cette dernière. Les transducteurs et la plaque forment un résonateur propice à la formation d'une onde de flexion stationnaire, de type onde de Lamb. Lorsque la fréquence de résonance de vibration de la surface de contact est dans le domaine ultrasonore, par exemple entre 10 kHz et 100 kHz, et que l'amplitude de la vibration est faible, typiquement de quelques microns, l'utilisateur peut ressentir une texturation de la surface de la plaque lorsque le doigt glisse le long de ladite surface. Cet effet est connu et est usuellement désigné par le terme "squeeze film". L'utilisateur peut ainsi percevoir une sensation de rugosité, ou une certaine résistance au glissement, alors que la surface de contact est en fait lisse.

Cet effet a été appliqué à des plaques d'interface transparentes, pouvant former des écrans. C'est notamment le cas du brevet US8780053, ou encore du brevet EP2707787. Dans ces documents, les transducteurs piézoélectriques mettant la plaque en vibration sont disposés à proximité des bordures d'une surface de contact, et permettent une mise en vibration résonante de cette dernière.

Les plaques d'interface précédemment décrites peuvent être couplées à une détection d'un point de contact par effet capacitif. Cependant, le recours à une détection capacitive pour détecter un point de contact sur une plaque d'interface peut ne pas être approprié à certaines applications, par exemple lorsque les doigts de l'utilisateur ne sont pas propres, ou lorsqu'utilisateur n'est pas en capacité de toucher la plaque d'interface avec précision.

Des dispositifs ont déjà été conçus, pour détecter une position d'un point d'impact autour d'un dispositif de type smartphone ou tablette tactile. De tels dispositifs sont par exemple décrits dans US2011084940, ou dans EP2544077 ou encore dans US20150242036.

L'invention décrite ci-après vise un objectif similaire, en proposant un procédé permettant d'établir un signal de commande en utilisant un dispositif nomade, présentant une plaque d'interface tactile, sans nécessiter un contact entre la plaque d'interface et le doigt d'un utilisateur.

### EXPOSE DE L'INVENTION

Un premier objet de l'invention est un procédé de commande d'un dispositif nomade conformément à la revendication 1.

L'objet peut notamment être un doigt et un stylet. Le point d'impact est de préférence localisé sur le support, en dehors du dispositif nomade.

Le dispositif nomade est disposé de façon amovible sur le support. Il est de préférence placé et retiré sans nécessiter l'utilisation d'un outil.

Le support peut être divisé en régions élémentaires et la position estimée lors de l'étape d) est une desdites régions élémentaires. Le nombre et la taille de chaque région élémentaire dépend du nombre de capteurs de mouvement mis en œuvre. Les régions élémentaires peuvent être prédéterminées en fonction du nombre et de la position de chaque capteur de mouvement.

Le dispositif nomade peut comprendre un écran tactile, formé, au moins en partie, par la plaque d'interface, cette dernière étant transparente.

Selon un mode de réalisation préféré, au moins un capteur de mouvement, et de préférence chaque capteur de mouvement, est un capteur piézoélectrique, relié à la plaque d'interface et apte à détecter une vibration de cette dernière. Selon ce mode de réalisation, la plaque d'interface peut être reliée à au moins un transducteur, dit transducteur d'actionnement, apte à exercer une pression sur la plaque d'interface de façon à former une onde de flexion stationnaire se propageant le long de la plaque d'interface, selon une fréquence de résonnance, et entraînant une vibration de la plaque d'interface. Une telle configuration est particulièrement appropriée à une mise en œuvre de l'invention. Elle peut apporter des fonctionnalités intéressantes à la plaque d'interface, par exemple la perception d'une sensation d'une texturation de la plaque, ou la possibilité d'estimer une force selon laquelle l'objet s'appuie sur la plaque.

Selon ce mode de réalisation un transducteur d'actionnement peut être utilisé en tant que capteur de mouvement. Selon ce mode de réalisation, au moins un transducteur d'actionnement, voire chaque transducteur d'actionnement, est un transducteur piézoélectrique.

Selon un mode de réalisation :
- lors de l'étape c), la comparaison vise à déterminer un ordre chronologique dans lequel chaque capteur de mouvement détecte la vibration; l'ordre chronologique correspond à la chronologie des instants de détection respectivement associés à chaque capteur.
- lors de l'étape d), la localisation du point d'impact est réalisée en fonction de l'ordre chronologique résultant de l'étape c).

De préférence, la distance entre au moins deux capteurs de mouvement est supérieure à 2 cm, voire 5 cm.

Le dispositif nomade peut comporter un circuit d'émission, le procédé comportant alors une étape f) d'émission d'un signal d'émission, par liaison sans fil, à destination d'un récepteur distant, l'émission étant commandée par le signal de commande généré lors de l'étape e). Le dispositif nomade peut notamment être un ordiphone ou une tablette portable. Le dispositif nomade est de préférence disposé de façon amovible sur le support.

Selon un mode de réalisation préféré, la plaque d'interface s'étend dans un plan, selon une aire, le support s'étendant selon une aire supérieure à deux fois, voire trois fois, voire cinq fois, l'aire de la plaque d'interface.

Un autre objet de l'invention est un dispositif, en particulier un dispositif nomade conformément à la revendication 11.

Le dispositif peut comporter les caractéristiques décrites ci-dessus, en lien avec le premier objet de l'invention, prises isolément ou selon les combinaisons techniquement réalisables. En particulier, au moins un capteur de mouvement, et de préférence chaque capteur de mouvement, peut être un capteur piézoélectrique, relié à la plaque d'interface et apte à détecter une vibration de cette dernière.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

### FIGURES

Les figures 1A et 1B représentent un exemple de dispositif nomade, disposé sur un support, pour la mise en oeuvre de l'invention.
La figure 2A schématise des évolutions temporelles de signaux détectés par des capteurs de mouvement suite à l'application d'un objet, par exemple un doigt, sur le support.
La figure 2B représente différentes régions élémentaires, définies sur le support, correspondant à des positions potentielles d'un point d'impact sur le support.
La figure 3A schématise un dispositif expérimental utilisé. Les figures 3B et 3C sont des courbes illustrant des évolutions temporelles de signaux enregistrés par des capteurs de mouvement du dispositif expérimental.
Les figures 4A et 4B montrent un mode de réalisation préféré de l'invention. La figure 4A montre un dispositif nomade pourvu d'une plaque vibrante. La figure 4B illustre l'application d'un doigt sur la plaque vibrante.

### EXPOSE DE MODES DE REALISATION PARTICULIERS

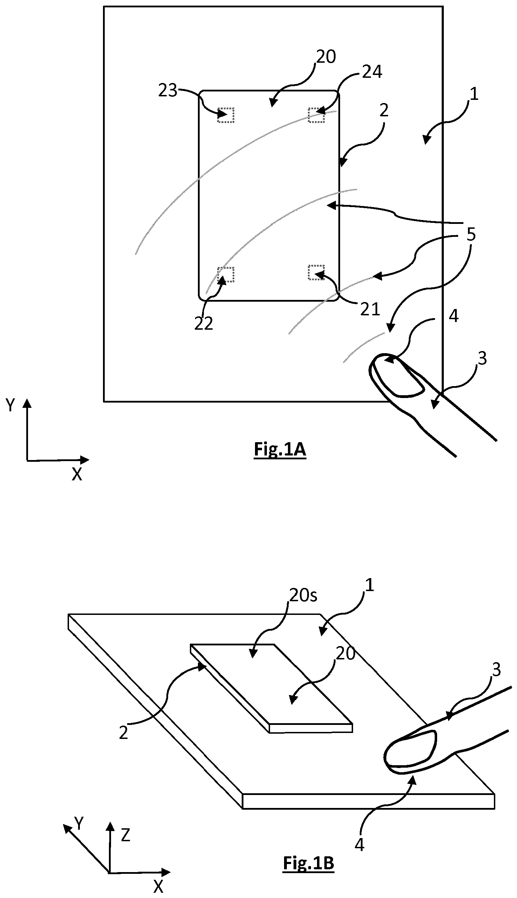

Les figures 1A et 1B représentent un exemple de dispositif permettant la mise en œuvre de l'invention. Un dispositif nomade 2 est fixé sur un support 1. Le terme nomade désigne un dispositif portable, compact, apte à être pris en main par un utilisateur et posé de façon réversible sur le support 1. Le dispositif nomade comporte une plaque d'interface 20, par exemple une plaque de verre ou d'un autre matériau transparent, définissant une interface tactile, de type écran tactile. La plaque d'interface 20 s'étend selon un plan principal XY et définit une surface 20s contre laquelle un doigt, ou autre objet, peut s'appuyer. La plaque d'interface 20 peut par exemple comprendre des moyens de détection du point d'appui du doigt par effet capacitif, tels qu'évoqués en lien avec l'art antérieur. Le dispositif nomade peut être un téléphone portable, de type ordiphone, usuellement désigné par le terme anglosaxon smartphone, ou une tablette. Il peut également s'agir d'un écran tactile équipant un système et destiné au paramétrage et/ou au pilotage dudit système.

Le dispositif nomade est apte à être piloté à partir de la position du point d'appui du doigt sur la plaque d'interface 20. Cette position peut par exemple générer le lancement d'une application exécutée par un processeur contenu dans le dispositif nomade. La position du point d'appui sur la plaque d'interface 20 peut également permettre le contrôle d'un paramètre de fonctionnement du dispositif.

Le dispositif nomade 2 comporte au moins deux capteurs de mouvement configurés pour détecter un mouvement subi par l'interface. Dans l'exemple représenté, le dispositif nomade comporte quatre capteurs de mouvement 21, 22, 23 et 24, reliés à la plaque d'interface 20. De préférence, au moins deux capteurs de mouvement, voire au moins trois ou quatre capteurs de mouvement sont espacés l'un de l'autre d'au moins 2 cm, et encore de préférence au moins 5 cm. Les capteurs de mouvement peuvent être des accéléromètres, par exemple des accéléromètres tri-axes, ce type d'accéléromètre étant courant dans des dispositifs nomades comme les tablettes ou les ordiphones. Selon un mode de réalisation préféré, décrit ultérieurement, les capteurs de mouvement sont des capteurs piézoélectriques couplés à la plaque d'interface 20 et aptes à détecter une vibration se propageant le long de cette dernière.

De préférence, le support 1 est réalisé selon un matériau rigide, par exemple un plastique, un verre ou un métal. Lorsqu'un élément 3 est appliqué contre le support 1, en un point d'impact 4 situé en dehors de la plaque d'interface 20, la pression exercée lors de l'application entraîne la formation d'une onde de vibration 5. L'onde de vibration 5 se propage le long du support 1. Le contact rigide entre le support 1 et le dispositif nomade 2 permet une propagation de l'onde de vibration 5 à travers le dispositif nomade. En se propageant à travers ce dernier, la vibration est détectée par les capteurs de mouvement, de telle sorte que plus un capteur de mouvement est proche du point d'impact 4, plus la détection, par le capteur, de l'onde de vibration 5 est précoce.

De façon à faciliter la préhension du support 1, et la mise en œuvre de l'invention, le support s'étend de préférence selon une aire supérieure ou égale à trois fois, voire cinq fois l'aire selon laquelle s'étend la plaque d'interface 20 selon le plan principal XY. De préférence, le support s'étend parallèlement au plan principal XY.

L'élément 3 appliqué contre le support, à l'extérieur de la plaque d'interface 20, est appuyé avec une vigueur suffisante à l'obtention d'une onde de vibration détectable par les capteurs de mouvement. Les inventeurs ont montré que les capteurs de mouvement actuels, qu'il s'agisse d'accéléromètres ou de capteurs piézoélectriques, sont suffisamment sensibles pour détecter une vibration d'amplitude aussi faible que celle produite par un simple pianotage sur le support 1 avec un doigt. L'objet 3 appliqué sur le support est généralement un doigt, mais il peut également s'agir d'un stylet ou d'un autre corps solide, et de préférence rigide.

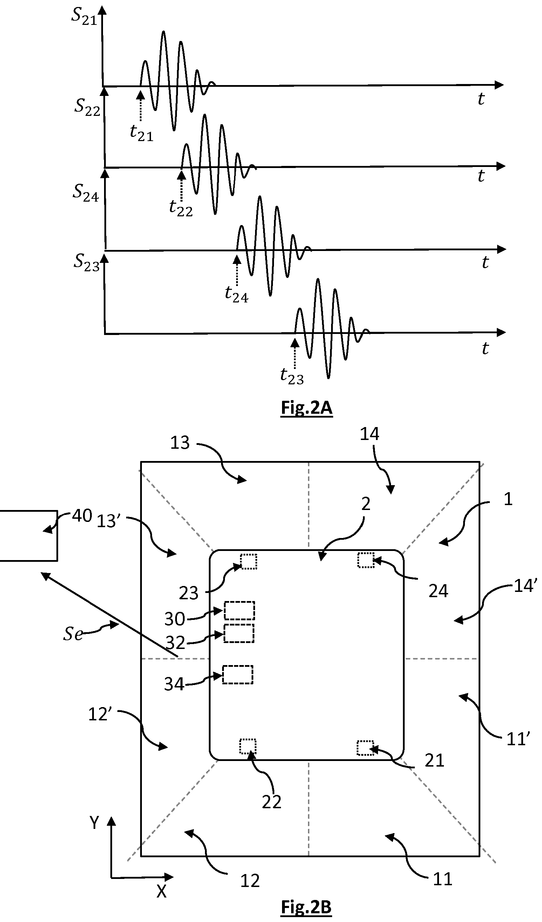

La figure 2A schématise des distributions temporelles de signaux, dits signaux de détection *S*₂₁, *S*₂₂, *S*₂₄ et *S*₂₃ générés respectivement par les capteurs de mouvement 21, 22, 24, 23_{,} lorsque le point d'impact 4 est situé comme illustré sur les figures 1A et 1B. A chaque capteur peut être attribué un instant de détection *t,* correspondant à un instant où le capteur détecte la vibration 5. L'instant de détection correspond alors à l'instant auquel la vibration 5 atteint le capteur de mouvement. L'instant de détection peut aisément être déterminé par seuillage du signal de détection généré par chaque capteur de mouvement, le seuillage étant effectué selon une valeur seuil prédéterminée ou d'une valeur seuil dépendant d'un bruit du capteur. Il est usuel que le seuil corresponde à *n* fois l'écart type σ du bruit de chaque capteur, *n* étant par exemple égal à 2 ou 3. Plus un capteur est proche du point d'impact, plus l'instant de détection est précoce. On a représenté, sur la figure 2A, les instants de détection *t*₂₁, *t*₂₂, *t*₂₄ et *t*₂₃ respectifs de chaque capteur de mouvement 21, 22, 24 et 23.

La chronologie des instants de détection permet de localiser une position du point d'impact 4 sur le support 1. Par position, on entend une région élémentaire du support, de forme prédéterminée, dans laquelle a lieu l'impact. Plus le nombre de capteurs est élevé, plus la taille de chaque région élémentaire est faible, et plus le nombre de régions élémentaires peut être élevé, ce qui permet définir un plus grand nombre de positions.

D'une façon générale, le procédé permet de distinguer un nombre de positions de l'impact égal à 2^{N-1}, N représentant le nombre de capteurs de mouvement mis en œuvre.

Dans l'exemple représenté, on dispose de quatre capteurs de mouvement respectivement positionnés en chaque coin du dispositif nomade 2, de façon à maximiser les distances entre chaque capteur de mouvement. Cela permet de distinguer huit positions différentes possibles du point d'impact 4, selon les régions élémentaires polygonales 11, 11', 12, 12', 13, 13', 14 et 14', délimitées par des pointillés sur la figure 2B. Le tableau 1 représente une correspondance entre la chronologie des instants de détection, et la région élémentaire dans laquelle se situe le point d'impact. La première colonne représente les références de chaque région élémentaire représentée sur la figure 2B. Les autres colonnes contiennent l'ordre chronologique, compris entre 1 (premier instant détecté) et 4 (dernier instant détecté), de chaque instant de détection.

**Tableau 1**

| | *t*₂₁ | *t*₂₂ | *t*₂₃ | *t*₂₄ |
|---|---|---|---|---|
| 11 | 1 | 2 | 4 | 3 |
| 11' | 1 | 3 | 4 | 2 |
| 12 | 2 | 1 | 3 | 4 |
| 12' | 3 | 1 | 2 | 4 |
| 13 | 4 | 3 | 1 | 2 |
| 13' | 4 | 2 | 1 | 3 |
| 14 | 3 | 4 | 2 | 1 |
| 14' | 2 | 4 | 3 | 1 |

Le dispositif nomade 2 comporte un processeur 30, apte à exécuter des instructions stockées dans une mémoire 32, de façon à localiser la position 3 du point d'impact 4 en fonction des instants de détection, et générer un signal de commande *Sc* à partir de cette position. Le signal de commande *Sc* peut être destiné au dispositif nomade ; il s'agit par exemple d'une instruction marche / arrêt ou le réglage d'un paramètre de fonctionnement. Lorsque le dispositif nomade 2 est un téléphone, le signal de commande *Sc* peut par exemple être une instruction de répondre à un appel, de raccrocher, ou de modifier le volume sonore. Alternativement, le signal de commande *Sc* peut être transmis à un circuit d'émission 34 du dispositif nomade, le circuit d'émission émettant alors un signal d'émission Se destiné à un récepteur distant 40 piloté par le dispositif nomade. La localisation de l'impact 4 permet ainsi le pilotage du récepteur distant 40. Le récepteur distant peut être par exemple une télévision, le dispositif nomade permettant une commande de la télévision en fonction de la position du point d'impact 4.

Ainsi, l'invention permet la génération d'un signal de commande *Sc*, par le dispositif nomade 2, sans avoir à toucher la plaque d'interface 20, ni le dispositif nomade 2 lui même. Il s'agit d'une façon particulière d'utiliser le dispositif nomade, adaptée à des situations dans lesquelles un contact avec la plaque d'interface 20 n'est pas souhaitable, par exemple lorsque l'utilisateur a des doigts sales, ou lorsqu'il n'est pas en mesure d'agir précisément sur cette plaque d'interface. L'utilisateur peut par exemple conduire un véhicule, ou exercer une autre activité, tout en pouvant commander le dispositif nomade de façon simple, sans nécessairement regarder la plaque d'interface 20.

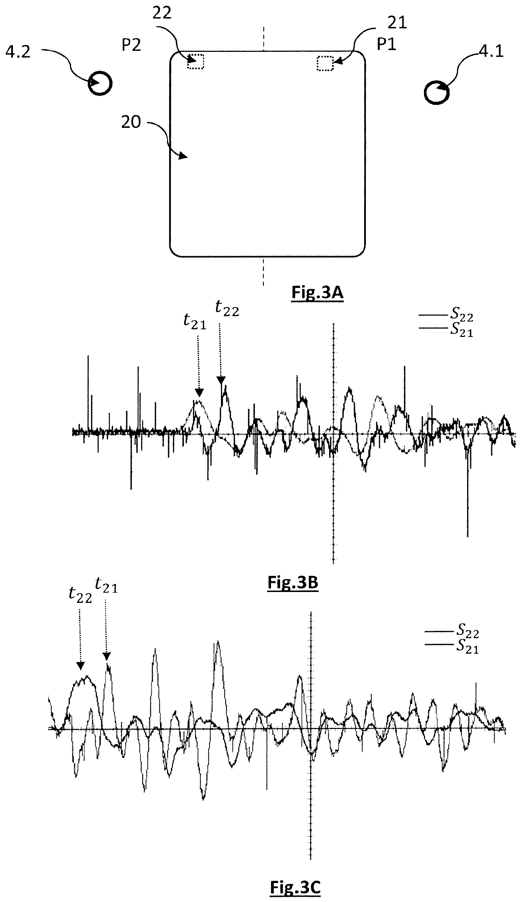

La figure 3A représente un essai expérimental, mené en utilisant deux capteurs piézoélectriques 21, 22 couplés à une plaque d'interface 20 en verre d'épaisseur 1,2 mm disposée sur une table, faisant office de support. Les capteurs piézoélectriques sont disposés à une distance d'environ 10 cm l'un de l'autre. Chaque capteur est constitué d'une couche mince d'un matériau piézoélectrique (PZT, acronyme signifiant Titano-zirconate de plomb), d'épaisseur 500 µm, ménagée entre deux couches minces conductrices de polarisation (Ni-Au) d'épaisseur 100 µm. La dimension de chaque capteur est de 10 mm x 5 mm dans le plan XY. On a tapé le support avec un doigt, de part et d'autre des capteurs. La figure 3B représente l'évolution temporelle de signaux *S*₂₁ et *S*₂₂ enregistrés respectivement par les capteurs 21 et 22 lorsque le point d'impact 4.1 est situé plus proche du capteur 21 que du capteur 22. La figure 3C représente l'évolution temporelle de signaux *S*₂₁ et *S*₂₂ enregistrés respectivement par les capteurs 21 et 22 lorsque le point d'impact 4.2 est situé plus proche du capteur 22 que du capteur 21. Dans une telle configuration, basée sur seulement deux capteurs, seules deux positions P1 et P2 sont déterminables, ces positions correspondant à des demi-espaces de part et d'autre du dispositif nomade 2. Sur la figure 3A, les positions sont délimitées par une ligne en pointillés.

Lorsque l'invention met en œuvre des capteurs de mouvement piézoélectriques, ces derniers sont formés d'un matériau piézoélectrique, par exemple AIN, LiNbO₃, BaTiO₃, disposé entre au moins deux électrodes. Les électrodes peuvent être formées d'aluminium, de nickel, d'or ou d'ITO (oxyde d'indium-étain), de platine... Les capteurs piézoélectriques peuvent être rapportés contre la plaque d'interface 20 par collage. Il peut s'agir de capteurs commerciaux, par exemple la référence NOLIAC NCE41 ou un capteur MORGAN de la série PZT400. Les capteurs piézoélectriques peuvent également être réalisés sous la forme de couches minces, en formant un circuit intégré obtenu par des procédés de microtechnologies de fabrication. La technologie de fabrication en couches minces facilite leur intégration sur la plaque d'interface. Les transducteurs piézoélectriques peuvent être similaires à ceux décrits dans la publication Vezzoli E. "Texture rendering stratégies with a high fidelity capacitive visual-haptic friction control device", International Conférence on Human Haptic Sensing and Touch Enabled Computer Applications, pp 251-260, London, 2016.

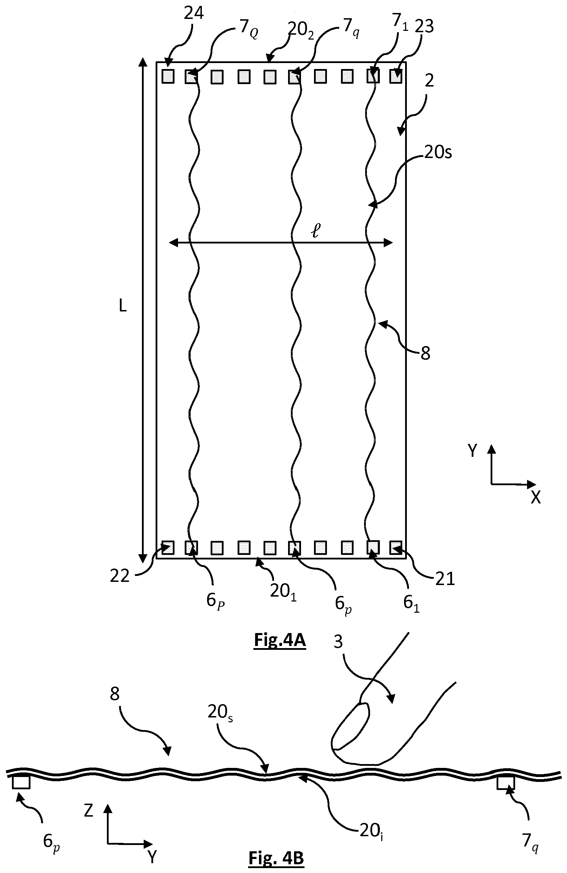

On a représenté, sur les figures 4A et 4B, un dispositif nomade 2 doté d'une plaque d'interface 20 convenant particulièrement à la mise en œuvre de l'invention. La plaque d'interface 20 est transparente, et s'étend selon un plan principal XY en formant, dans ce plan, un rectangle de longueur L (selon l'axe Y) et de largeur ℓ (selon l'axe X). Dans cet exemple, L = 195 mm, et ℓ =125 mm. L'épaisseur ε de la plaque d'interface 20, selon l'axe transversal Z, est de 1.5 mm.

L'épaisseur ε permet une vibration de la plaque d'interface 20 selon une onde de flexion 8 stationnaire, comme décrit ci-après. L'épaisseur ε dépend du matériau formant la plaque d'interface ainsi que de l'application visée, mais elle est de préférence inférieure à 10 mm, voire inférieure à 5 mm. Le matériau formant la plaque d'interface 20 est, dans cet exemple du verre. D'autres matériaux, de préférence rigides, peuvent convenir, en particulier des matériaux dont le module d'Young est compris entre 30 GPa et 100 GPa, et de préférence entre 30 et 80 GPa. Le matériau de la plaque d'interface peut être par exemple un polycarbonate ou un autre polymère organique, de préférence transparent.

La plaque d'interface 20 est délimitée par deux bordures latérales 20₁ et 20₂ au voisinage desquelles sont respectivement alignés des transducteurs d'actionnement 6₁...6*ₚ*...6_{P}. et 7₁...7*_{q}*...7_{Q}. Par au voisinage, on entend à une distance inférieure à 2 cm. Dans cet exemple, P = Q = 8. Les transducteurs d'actionnement sont placés au contact de la plaque d'interface 20 et permettent de déformer périodiquement cette dernière selon un axe Z, perpendiculairement au plan XY selon lequel s'étend la plaque. La plaque d'interface 20 est délimitée par une surface supérieure, formant la surface de contact 20ₛ, et une surface inférieure 20ᵢ. Dans cet exemple, les transducteurs d'actionnement sont appliqués contre la partie inférieure 20ᵢ de la plaque 20.

Les transducteurs d'actionnement, en se déformant, induisent un déplacement de la plaque d'interface 20 selon l'axe Z, c'est-à-dire selon une direction perpendiculaire au plan principal XY. La déformation des transducteurs s'effectue selon des oscillations. Une onde de flexion 8 est alors générée, se propageant selon l'axe longitudinal Y. On peut ainsi obtenir une formation d'une onde 8 stationnaire, s'étendant selon l'axe longitudinal Y, à une fréquence de résonance des transducteurs. Un exemple d'obtention d'une telle onde stationnaire est par exemple décrit dans la partie III de la publication "Biet 2007" citée en lien avec l'art antérieur, ou dans le brevet US8780053. Dans cet exemple, les transducteurs d'actionnement piézoélectriques sont activés de façon synchrone, par un signal d'alimentation sinusoïdal. Le signal d'alimentation appliqué à chaque transducteur a, dans cet exemple, une même amplitude électrique, sans déphasage d'un transducteur à un autre. L'homme du métier sait adapter l'amplitude ou le déphasage du signal d'alimentation de chaque transducteur, de façon à obtenir une onde de flexion stationnaire 8, se propageant le long de la plaque d'interface 20, selon un mode de résonance. La fréquence de résonance de l'onde de flexion 8 est de préférence supérieure à 10 kHz, et est de préférence inférieure à 200 kHz. Une telle plage de fréquence se situe dans le domaine des ultrasons, et n'occasionne pas de gêne acoustique.

La fréquence de résonance peut par exemple être de 68 kHz. La longueur d'onde λ de l'onde de flexion 8 peut être comprise entre 3 mm et 40 mm. Dans cet exemple, la longueur d'onde λ est de 16 mm. L'amplitude de l'onde de flexion est inférieure à 10 µm, et est de préférence inférieure à 5 µm ou 3 µm. Dans cet exemple, l'onde de flexion 8 est une onde de Lamb d'amplitude comprise entre 2 µm et 3 µm. Par amplitude, on entend une amplitude selon la direction Z perpendiculaire au plan XY selon lequel s'étend la plaque d'interface 20. Comme évoqué en lien avec l'art antérieur, la formation d'une telle onde de flexion permet une sensation, par un doigt 3 apposé sur la surface, d'une sensation de texture de la surface de contact 20s.

Par ailleurs, le recours à une plaque d'interface vibrante permet d'estimer une force d'application selon laquelle un doigt s'appuie contre la plaque d'interface 20, comme décrit dans la demande de brevet FR1750047 déposée le 03 janvier 2017. L'estimation de la force d'application peut être obtenue en mesurant une atténuation de l'amplitude de l'onde de flexion 8 se propageant dans la plaque d'interface. Elle peut également être obtenue en imposant une amplitude, dite de consigne, à l'onde de flexion 8 et, suite à l'application d'une force d'appui sur la plaque, en rétroagissant de manière à maintenir l'amplitude de consigne. L'intensité de la rétroaction permet alors d'estimer la force appliquée. Une telle estimation offre une nouvelle possibilité de contrôle du dispositif nomade équipé de la plaque d'interface, la valeur d'un paramètre de fonctionnement du dispositif pouvant être contrôlée par une mesure de la force d'appui appliquée par le doigt ou par tout autre objet.

Une telle configuration requiert une implantation de capteurs piézoélectriques reliés à la plaque d'interface 20. Selon l'exemple représenté sur la figure 4A, on a disposé quatre capteurs piézoélectriques 21, 22, 23 et 24 au niveau de chaque coin de la plaque d'interface 20. Les capteurs piézoélectriques ont une structure identique aux actionneurs piézoélectriques 6₁...6_{P...} et 7₁...7_{Q}. Tandis qu'un actionneur piézoélectrique génère une déformation mécanique à partir d'une alimentation électrique, un capteur piézoélectrique génère un signal électrique à partir d'une déformation mécanique. Selon un autre exemple, les transducteurs piézoélectriques 6₁...6_{P...} et 7₁...7_{Q} jouent à la fois le rôle d'actionneurs et de capteurs. Lorsqu'ils sont utilisés en tant qu'actionneurs, ils permettent d'obtenir une sensation de texturation au contact de la plaque 20. Lorsqu'ils sont utilisés en tant que détecteurs, ils permettent de détecter une vibration de la plaque 20 sous l'effet d'un impact sur le support 1. Les signaux qu'ils détectent sont alors transmis au microprocesseur 30 afin de déterminer la position 4 de l'impact sur le support 1, et d'établir un signal de commande Sc en fonction de cette position.

Ainsi, un procédé selon l'invention peut particulièrement être mis en œuvre sur un dispositif nomade doté d'une plaque d'interface 20 pouvant être soumise à une onde de flexion stationnaire, du fait qu'une telle plaque est nécessairement couplée à des transducteurs piézoélectriques. L'invention permet d'ajouter une fonctionnalité supplémentaire aux possibilités offertes par une plaque d'interface vibrante, comme une sensation de texturation lors du toucher et/ou une estimation de l'intensité d'une force d'appui s'exerçant sur la plaque d'interface. La propagation de l'onde de flexion stationnaire 8 peut toutefois perturber la détection, par un capteur de mouvement, de l'onde de vibration 5 générée par l'impact du doigt 3, et affecter la sensibilité de la détection. Il est donc préférable, mais non nécessaire, que le procédé soit mis en œuvre sans propagation de l'onde de flexion stationnaire si l'on souhaite disposer d'une sensibilité de détection élevée.

## Revendications

1. Procédé de commande d'un dispositif nomade (2), le dispositif nomade étant disposé sur un support (1), le dispositif nomade comportant une plaque d'interface (20) apte à être touchée par un objet (3) de façon à piloter ledit dispositif, le dispositif nomade (2) comportant au moins deux capteurs de mouvement (21, 22, 23, 24), aptes à détecter une vibration se propageant à travers le dispositif, le procédé comportant les étapes suivantes :
a) application d'un objet sur le support, en un point d'impact (4), le point d'impact étant situé à l'extérieur de la plaque d'interface (20), l'application de l'objet entraînant une propagation d'une vibration (5) se propageant le long du support, vers le dispositif (2);
b) détection, par chaque capteur de mouvement (21, 22, 23, 24), de la vibration (5), à un instant de détection (*t*₂₁, *t*₂₂, *t*₂₃, *t*₂₄) ;
c) comparaison des instants de détection respectivement détectés par chaque capteur de mouvement ;
d) estimation d'une position du point d'impact (4), sur le support (1), en fonction de la comparaison effectuée lors de l'étape c);
e) génération d'un signal de commande (*Sc*) du dispositif nomade en fonction de la position estimée lors de l'étape d) ;
le procédé étant **caractérisé en ce que** la plaque d'interface (20) est reliée à au moins un transducteur, dit transducteur d'actionnement (6₁...6_{P}, 7₁...7_{Q}) apte à exercer une pression sur la plaque d'interface de façon à former une onde de flexion stationnaire (8) se propageant le long de la plaque d'interface (20), selon une fréquence de résonance, et entraînant une vibration de la plaque d'interface, au moins un transducteur d'actionnement formant un des capteurs de mouvement ;
et **en ce que** la fréquence de résonance de l'onde de flexion est ultrasonore, l'amplitude de l'onde de flexion étant inférieure à 10 µm, l'onde de flexion étant configurée pour permettre une perception de texturation lors d'un toucher de la plaque d'interface.

2. Procédé selon la revendication 1, dans lequel au moins au moins un capteur de mouvement (21, 22, 23, 24) est un accéléromètre.

3. Procédé selon la revendication 1 dans lequel au moins un capteur de mouvement (21, 22, 23, 24) est un capteur piézoélectrique, relié à la plaque d'interface (20) et apte à détecter une vibration de cette dernière.

4. Procédé selon la revendication 3, dans lequel chaque capteur de mouvement est un capteur piézoélectrique.

5. Procédé selon l'une quelconque des revendications précédentes, dans lequel :
- lors de l'étape c), la comparaison vise à déterminer un ordre chronologique dans lequel chaque capteur de mouvement détecte la vibration (5);
- lors de l'étape d), la localisation du point d'impact est réalisée en fonction de l'ordre chronologique résultant de l'étape c).

6. Procédé selon l'une quelconque des revendications précédentes, dans lequel la distance entre au moins deux capteurs de mouvement est supérieure à 5 cm.

7. Procédé selon l'une quelconque des revendications précédentes, dans lequel le dispositif nomade comportant un circuit d'émission (34), le procédé comporte une étape f) d'émission d'un signal d'émission (*Se*), par liaison sans fil, à destination d'un récepteur distant (40).

8. Procédé selon l'une quelconque des revendications précédentes, dans lequel le dispositif nomade est un ordiphone ou une tablette portable.

9. Procédé selon l'une quelconque des revendications précédentes, dans lequel le dispositif nomade (2) est disposé de façon amovible sur le support.

10. Procédé selon l'une quelconque des revendications précédentes, dans lequel la plaque d'interface (20) s'étendant, dans un plan (XY), selon une aire, le support (1) s'étend selon une aire supérieure à trois fois ou cinq fois l'aire de la plaque d'interface

11. Dispositif nomade (2), comportant :
• un microprocesseur (30) ;
• au moins deux capteurs de mouvement (21, 22, 23, 24), aptes à détecter une vibration se propageant à travers le dispositif nomade;
• une plaque d'interface (20), apte à être touchée par un objet (3) de façon à piloter le dispositif, la plaque d'interface (20) étant reliée à au moins un transducteur, dit transducteur d'actionnement (6₁...6_{P}, 7₁...7_{Q}), apte à exercer une pression sur la plaque d'interface de façon à former une onde de flexion stationnaire (8) se propageant le long de la plaque d'interface, selon une fréquence de résonnance ultrasonore, et entraînant une vibration de la plaque d'interface, l'amplitude de l'onde de flexion étant inférieure à 10 µm, l'onde de flexion étant configurée pour permettre une perception de texturation lors d'un toucher de la plaque d'interface;
le dispositif étant **caractérisé en ce qu'**il est apte à être disposé sur un support (1) et que le microprocesseur est configuré pour mettre en œuvre, suite à l'application d'un objet (3) sur le support en un point d'impact (4), les étapes c) à e) d'un procédé selon l'une quelconque des revendications 1 à 10 à partir de signaux de détection générés par les capteurs de mouvement, au moins un des capteurs de mouvement étant un transducteur d'actionnement.

12. Dispositif (2) selon la revendication 11, dans lequel au moins un capteur de mouvement (21, 22, 23, 24) est un capteur piézoélectrique, relié à la plaque d'interface (20) et apte à détecter une vibration de cette dernière.

## Patentansprüche

1. Verfahren zur Steuerung einer mobilen Vorrichtung (2), wobei die mobile Vorrichtung auf einem Träger (1) angeordnet ist, wobei die mobile Vorrichtung eine Schnittstellenplatte (20) umfasst, die dazu fähig ist, von einem Objekt (3) berührt zu werden, um die Vorrichtung anzusteuern, wobei die mobile Vorrichtung (2) mindestens zwei Bewegungssensoren (21, 22, 23, 24) umfasst, die dazu fähig sind, eine sich durch die Vorrichtung ausbreitende Schwingung zu detektieren, wobei das Verfahren die folgenden Schritte umfasst:
a) Anwenden eines Objekts auf den Träger an einem Einwirkungspunkt (4), wobei sich der Einwirkungspunkt außerhalb der Schnittstellenplatte (20) befindet, wobei das Anwenden des Objekts eine Ausbreitung einer Schwingung (5) bewirkt, die sich entlang des Trägers zu der Vorrichtung (2) hin ausbreitet;
b) Detektieren, durch jeden Bewegungssensor (21, 22, 23, 24), der Schwingung (5) zu einem Detektionszeitpunkt (*t*₂₁, *t*₂₂, *t*₂₃, *t*₂₄);
c) Vergleichen der Detektionszeitpunkte, die von jedem Bewegungssensor jeweils detektiert werden;
d) Ermitteln einer Position des Einwirkungspunkts (4) auf dem Träger (1) in Abhängigkeit von dem in Schritt c) ausgeführten Vergleich;
e) Erzeugen eines Steuersignals (Sc) für die mobile Vorrichtung in Abhängigkeit von der in Schritt d) ermittelten Position;
wobei das Verfahren **dadurch gekennzeichnet ist, dass** die Schnittstellenplatte (20) mit mindestens einem Wandler, als Betätigungswandler (6₁...6_{P}, 7₁...7_{Q}) bezeichnet, verbunden ist, der dazu fähig ist, einen Druck auf die Schnittstellenplatte auszuüben, um eine stationäre Biegewelle (8) zu bilden, die sich gemäß einer Resonanzfrequenz entlang der Schnittstellenplatte (20) ausbreitet und eine Schwingung der Schnittstellenplatte bewirkt, wobei mindestens ein Betätigungswandler einen der Bewegungssensoren bildet;
und dass die Resonanzfrequenz der Biegewelle eine Ultraschallfrequenz ist, wobei die Amplitude der Biegewelle kleiner als 10 µm ist, wobei die Biegewelle dazu konfiguriert ist, bei einem Berühren der Schnittstellenplatte eine Wahrnehmung einer Texturierung zu ermöglichen.

2. Verfahren nach Anspruch 1, wobei mindestens mindestens ein Bewegungssensor (21, 22, 23, 24) ein Beschleunigungsmesser ist.

3. Verfahren nach Anspruch 1, wobei mindestens ein Bewegungssensor (21, 22, 23, 24) ein piezoelektrischer Sensor ist, der mit der Schnittstellenplatte (20) verbunden ist und dazu fähig ist, eine Schwingung derselben zu detektieren.

4. Verfahren nach Anspruch 3, wobei jeder Bewegungssensor ein piezoelektrischer Sensor ist.

5. Verfahren nach einem der vorhergehenden Ansprüche, wobei:
- in Schritt c) durch das Vergleichen eine chronologische Reihenfolge bestimmt werden soll, gemäß der jeder Bewegungssensor die Schwingung (5) detektiert;
- in Schritt d) die Lokalisierung des Einwirkungspunkts in Abhängigkeit von der chronologischen Reihenfolge erfolgt, die sich aus Schritt c) ergibt.

6. Verfahren nach einem der vorhergehenden Ansprüche, wobei der Abstand zwischen mindestens zwei Bewegungssensoren größer als 5 cm ist.

7. Verfahren nach einem der vorhergehenden Ansprüche, wobei die mobile Vorrichtung eine Sendeschaltung (34) umfasst und wobei das Verfahren einen Schritt f) des Sendens eines Sendesignals (Se) über eine drahtlose Verbindung an einen entfernten Empfänger (40) umfasst.

8. Verfahren nach einem der vorhergehenden Ansprüche, wobei die mobile Vorrichtung ein Smartphone oder ein Tablet ist.

9. Verfahren nach einem der vorhergehenden Ansprüche, wobei die mobile Vorrichtung (2) entfernbar auf dem Träger angeordnet ist.

10. Verfahren nach einem der vorhergehenden Ansprüche, wobei sich die Schnittstellenplatte (20) in einer Ebene (XY) über einen Bereich erstreckt und wobei sich der Träger (1) über einen Bereich erstreckt, der dreimal oder fünfmal so groß wie der Bereich der Schnittstellenplatte ist.

11. Mobile Vorrichtung (2), die Folgendes umfasst:
• einen Mikroprozessor (30);
• mindestens zwei Bewegungssensoren (21, 22, 23, 24), die dazu fähig sind, eine sich durch die mobile Vorrichtung ausbreitende Schwingung zu detektieren;
• eine Schnittstellenplatte (20), die dazu fähig ist, von einem Objekt (3) berührt zu werden, um die Vorrichtung anzusteuern, wobei die Schnittstellenplatte (20) mit mindestens einem Wandler, als Betätigungswandler (6₁...6_{P}, 7₁...7_{Q}) bezeichnet, verbunden ist, der dazu fähig ist, einen Druck auf die Schnittstellenplatte auszuüben, um eine stationäre Biegewelle (8) zu bilden, die sich entlang der Schnittstellenplatte gemäß einer Ultraschallresonanzfrequenz ausbreitet und eine Schwingung der Schnittstellenplatte bewirkt, wobei die Amplitude der Biegewelle kleiner als 10 µm ist, wobei die Biegewelle dazu konfiguriert ist, bei einem Berühren der Schnittstellenplatte eine Wahrnehmung einer Texturierung zu ermöglichen;
wobei die Vorrichtung **dadurch gekennzeichnet ist, dass** sie dazu fähig ist, auf einem Träger (1) angeordnet zu werden, und der Mikroprozessor dazu konfiguriert ist, im Anschluss an das Anwenden eines Objekts (3) auf den Träger an einem Einwirkungspunkt (4) auf Basis von Detektionssignalen, die durch die Bewegungssensoren erzeugt werden, die Schritte c) bis e) eines Verfahrens nach einem der Ansprüche 1 bis 10 umzusetzen, wobei mindestens einer der Bewegungssensoren ein Betätigungswandler ist.

12. Vorrichtung (2) nach Anspruch 11, wobei mindestens ein Bewegungssensor (21, 22, 23, 24) ein piezoelektrischer Sensor ist, der mit der Schnittstellenplatte (20) verbunden ist und dazu fähig ist, eine Schwingung derselben zu detektieren.

## Claims

1. A method for controlling a mobile device (2), the mobile device being placed on a holder (1), the mobile device comprising an interface plate (20) able to be touched by an object (3) so as to control said device, the mobile device (2) comprising at least two movement sensors (21, 22, 23, 24), which are able to detect a vibration propagating through the device, the method comprising the following steps:
a) applying an object to the holder, at a point of impact (4), the point of impact being located outside the interface plate (20), the application of the object leading to a propagation of a vibration (5) that propagates along the holder, toward the device (2);
b) detecting, with each movement sensor (21, 22, 23, 24), the vibration (5), at a detection time (*t*₂₁, *t*₂₂, *t*₂₃, *t*₂₄);
c) comparing the detection times detected by each movement sensor, respectively;
d) estimating a position of the point of impact (4), on the holder (1), depending on the comparison carried out in step c);
e) generating a control signal (Sc) for the mobile device depending on the position estimated in step d);
the method being such that the interface plate (20) is connected to at least one so-called actuating transducer (6₁ ...6*_{P}*, 7₁ ... 7*_{Q}*) able to exert a pressure on the interface plate so as to form a stationary bending wave (8) that propagates along the interface plate (20), at a resonant frequency, and that leads to a vibration of the interface plate, at least one actuating transducer forming one of the movement sensors ;
and that the resonant frequency of the flexural wave is ultrasonic, the amplitude of the flexural wave being less than 10 µm, the flexural wave being configured to allow a texture to be sensed when the interface plate is touched.

2. The method as claimed in claim 1, wherein at least one movement sensor (21, 22, 23, 24) is an accelerometer.

3. The method as claimed in claim 1, wherein at least one movement sensor (21, 22, 23, 24) is a piezoelectric sensor, connected to the interface plate (20) and able to detect a vibration of the latter.

4. The method as claimed in claim 3, wherein each movement sensor is a piezoelectric sensor.

5. The method as claimed in any one of the preceding claims, wherein:
- in step c), the comparison aims to determine a chronological order in which each movement sensor detects the vibration (5);
- in step d), the point of impact is located depending on the chronological order resulting from step c).

6. The method as claimed in any one of the preceding claims, wherein the distance between at least two movement sensors is larger than 5 cm.

7. The method as claimed in any one of the preceding claims, wherein, the mobile device comprising an emitting circuit (34), the method comprises a step f) of emitting an emission signal (*Se*)*,* by wireless link, intended for a remote receiver (40).

8. The method as claimed in any one of the preceding claims, wherein the mobile device is a smart phone or a portable tablet computer.

9. The method as claimed in any one of the preceding claims, wherein the mobile device (2) is removably placed on the holder.

10. The method as claimed in any one of the preceding claims, wherein, the interface plate (20) extending, in a plane (XY), over an area, the holder (1) extends over an area larger than three times or five times the area of the interface plate.

11. A mobile device (2), comprising:
• a microprocessor (30);
• at least two movement sensors (21, 22, 23, 24), which are able to detect a vibration propagating through the mobile device;
• an interface plate (20), able to be touched by an object (3) so as to control the device, the interface plate (20) being connected to at least one so-called actuating transducer (6₁ ... 6*_{P}*, 7₁ ... 7*_{Q}*), which is able to exert a pressure on the interface plate so as to form a stationary bending wave (8) that propagates along the interface plate, at a resonant frequency, and that leads to a vibration of the interface plate, the amplitude of the flexural wave being less than 10 µm, the flexural wave being configured to allow a texturation to be sensed when the interface plate is touched ;
the device being **characterized in that** it is able to be placed on a holder (1) and **in that** the microprocessor is configured to implement, following the application of an object (3) to the holder at a point of impact (4), steps c) to e) of a method as claimed in any one of claims 1 to 10 on the basis of detection signals generated by the movement sensors, at least one of the movement sensors being an actuating transducer.

12. The device (2) as claimed in claim 11, wherein at least one movement sensor (21, 22, 23, 24) is a piezoelectric sensor, connected to the interface plate (20) and able to detect a vibration of the latter.
